# EUROPEAN PATENT SPECIFICATION

(11) **EP 2 512 265 B1**
(45) Date of publication and mention of the grant of the patent: **04.06.2014**
(21) Application number: 10787497.6
(22) Date of filing: 14.12.2010
(51) Int. Cl.: A23L 1/236, A23L 1/302, A23L 1/304, A23L 1/305, A23L 2/52, A23L 2/56, A23L 2/60, A23L 1/22

(54) **AFTERTASTE MASKING**
NACHGESCHMACKSMASKIERUNG
MASQUAGE D'ARRIÈRE-GOÛT

(30) Priority: 15.12.2009 US 286577 P
(43) Date of publication of application: 24.10.2012
(73) Proprietor: Givaudan SA, 1214 Vernier (CH)
(72) Inventor: BOM, David, C., Cincinnati Ohio 45252 (US); GRAY, Kimberley, Loveland Ohio 45140 (US); POTINENI, Rajesh, Venkata, Cincinnati Ohio 45236 (US); VAN OMMEREN, Esther, NL-8241 AS Lelystad (NL)
(74) Representative: Givaudan Patents
(86) International application number: PCT/EP2010/069622
(87) International publication number: WO 2011/073187

(56) References cited:
- WO-A1-2006/052231
- US-A- 3 329 508
- US-A1- 2008 107 775
- US-A1- 2009 117 256

## Description

This disclosure relates to the masking of bitter aftertastes.

Bitter aftertastes are observed in the consumption of many consumable compositions (i.e., compositions that are taken orally, either for ingestion (for example, foodstuffs and beverages) or for retaining temporarily in the mouth before spitting out (for example, mouthwashes). One particular example is the bitter aftertaste found in some natural and artificial sweeteners other than sugar, for example, stevia derivatives including rebaudioside A ("Reb A"), stevioside, sucralose, aspartame, trilobatin, cyclamate, saccharin, neotame, monatin and acesulfame K ("ace-K"). This can create resistance in consumers, for example, those who are trying to reduce calorie intake by consuming products in which part of the normal sugar-based sweeteners has been replaced by such sweeteners. The bitter aftertaste is especially pronounced in the so-called high-intensity sweeteners.

However, bitter aftertastes are not solely the result of sweetener addition. For example, functional ingredients and nutraceuticals can also cause off-notes or after-tastes, examples include caffeine, taurine, L-camitine, tannins, gluconorolactone, certain vitamins and minerals, and salts found in sport drinks and energy drinks.

One proposed method of solving this problem is to add masking agents that mask the bitter aftertaste while having no detrimental effect on the other orally-experienced properties. While the mechanism of such a masking is not clearly understood, it is believed to involve the blocking of at least some of the bitter receptors in the mouth and on the tongue. To date, practical realisation of the mechanism has not been particularly successful.

It has now been found that it is possible to mask a wide spectrum of bitter aftertastes, by means of a simple, effective process. There is therefore provided a method of masking a bitter aftertaste experienced in the consumption of a consumable composition, comprising the addition to the composition of a masking quantity of choline chloride.

Choline chloride occurs in nature and is an essential nutrient. It is on the GRAS (Generally Recognised As Safe) list of the US Food and Drug Administration, meaning that it can be used without restriction. It is sold commercially as a dietary supplement and the pure material is available from fine chemicals suppliers. It is known that it can be added to sweet-enhancing compositions (for example, US 3329508 and US 2008/107775). However, the fact that it can mask bitter aftertastes in a wide range of applications is hitherto unknown and surprising.

By "masking quantity" is meant sufficient choline chloride to produce the desired masking of the bitter aftertaste. The quantity, which is considerably less than the quantities used for dietary supplements (425 mg per day for women, 525 mg per day for men) will naturally vary, depending on the degree of masking desired, and the natures of the composition and of the particular aftertaste sought to be blocked. However, the skilled person can easily determine a suitable quantity in every case with only routine experimentation.

The quantities of choline chloride used will vary between 500 ppb and 500 ppm, more particularly between 10 ppm and 50 ppm.

Particular, non-limiting examples of bitter aftertastes that can be blocked as hereinabove described are those experienced with regard to:
- non-sugar sweeteners
- sports drinks
- coffee-based beverages
- soy-based beverages.

The choline chloride may be used in any consumable composition in which a bitter aftertaste may be experienced. Non-limiting examples of such compositions include diet soft drinks, flavoured water, dairy beverages, coffee beverages, yogurt, ice cream, oral pharmaceutical formulations, cereals, cookies, cakes, chewing gum, hard candies, chocolate, energy drinks, toothpastes, mouthwashes and nutraceuticals.

There is therefore also provided a consumable composition, in which the composition comprises a composition base comprising at least one bitter aftertaste-provoking ingredient, and an aftertaste-masking quantity of choline chloride. Consumable compositions that contain choline chloride in the normal quantities needed for dietary supplemental reasons are not included in such compositions.

By "composition base" is meant the combination of all of the ingredients necessary to make the composition, apart from the choline chloride.

The disclosure is now further described with reference to the following examples, which describes particular embodiments and which are not intended to be in any way limiting on the scope of the description.

### Example 1

Use of choline chloride in various cola beverages

### (a) Sucralose cola, choline chloride at 12ppm.

A blind test conducted by 12 panelists found that, in contrast to the untreated cola, the treated cola had a more pleasant flavor profile, with no aftertaste or off-notes, with some panelists reporting a slight decrease in sweetness.

The study was repeated with 6 ppm choline chloride. Again, reduced off-notes and aftertaste were noted by all panellists..

### (b) Reb A cola; 12 ppm

The panelists observed reduced after-taste and fewer off-notes.

### (c) ASP/Ace-k cola; 12 ppm

The panelists observed reduced off-notes and after-taste. Some thought sweetness was slightly diminished. The same results were noted at 6 ppm.

### Example 2

### Choline chloride as a taste masker of bitterness of coffee

Two samples of freshly brewed coffee were presented blind to five tasters. One sample was the control and the other was the test sample, to which 10 ppm (with respect to coffee) of choline chloride had been added. The tasters reported that the sample containing choline chloride was less bitter.

### Example 3

### Choline chloride as a vitamin and mineral taste masker of a sports drink.

Two samples of a commercially-available red orange sports drink were presented blind to five tasters. One sample was the control and the other was the test sample, which contained 10 ppm of choline chloride. The tasters reported that the sample containing choline chloride was fresher, less soapy and less bitter than the control.

### Example 4

### Choline chloride as a bitterness masker in soy milk.

Two samples of a commercially-available soy milk nature were presented blind to five tasters. One sample was the control and the other was the test sample, which contained 10 ppm of choline chloride. The tasters reported that the sample containing choline chloride was creamier, less bitter and less dry soy bean like.

Although the embodiments have been described in detail through the above description and the preceding examples, these examples are for the purpose of illustration only and it is understood that variations and modifications can be made by one skilled in the art without departing from the scope of the disclosure. It should be understood that the embodiments described above are not only in the alternative, but can be combined.

## Claims

1. A method of masking a bitter aftertaste experienced in the consumption of a consumable composition, comprising the addition to the composition of a masking quantity of choline chloride in which the choline chloride is present in the composition to the extent of from 500 ppb to 500 ppm.

2. The method according to claim 1, in which the choline chloride is present to the extent of from 10 ppm to 50 ppm.

3. A consumable composition, in which the composition comprises a composition base comprising at least one bitter aftertaste-provoking ingredient, and an aftertaste-masking quantity of choline chloride in which the choline chloride is present to the extent of from 500 ppb to 500 ppm.

4. A consumable composition according to claim 3 in which the choline chloride is present to the extent of from 10 ppm to 50 ppm.

## Patentansprüche

1. Verfahren zum Maskieren eines bitteren Nachgeschmacks, der beim Verzehr einer Verzehrszusammensetzung wahrgenommen wird, umfassend das Versetzen der Zusammensetzung mit einer maskierenden Menge an Cholinchlorid, wobei das Cholinchlorid in der Zusammensetzung im Ausmaß von 500 ppb bis 500 ppm vorliegt.

2. Verfahren nach Anspruch 1, wobei das Cholinchlorid im Ausmaß von 10 ppm bis 50 ppm vorliegt.

3. Verzehrszusammensetzung, wobei die Zusammensetzung eine Zusammensetzungsgrundlage, die mindestens einen Bestandteil, der einen bitteren Nachgeschmack hinterlässt, umfasst, und eine nachgeschmacksmaskierende Menge an Cholinchlorid umfasst, wobei das Cholinchlorid im Ausmaß von 500 ppb bis 500 ppm vorliegt.

4. Verzehrszusammensetzung nach Anspruch 3, wobei das Cholinchlorid im Ausmaß von 10 ppm bis 50 ppm vorliegt.

## Revendications

1. Méthode destinée à masquer un arrière-goût amer ressenti lors de la consommation d'une composition consommable, comprenant l'addition à la composition d'une quantité de masquage de chlorure de choline, **caractérisée en ce que** le chlorure de choline est présent dans la composition selon une quantité allant de 500 ppb à 500 ppm.

2. Méthode selon la revendication 1, **caractérisée en ce que** le chlorure de choline est présent selon une quantité allant de 10 ppm à 50 ppm.

3. Composition consommable, **caractérisée en ce que** la composition comprend une base de composition comprenant au moins un ingrédient provoquant un arrière-goût amer, et une quantité de masquage d'arrière-goût de chlorure de choline où le chlorure de choline est présent selon une quantité allant de 500 ppb à 500 ppm.

4. Composition consommable selon la revendication 3, **caractérisée en ce que** le chlorure de choline est présent selon une quantité allant de 10 ppm à 50 ppm.
